# EUROPÄISCHE PATENTSCHRIFT

(11) **EP 0 895 962 B1**
(45) Veröffentlichungstag und Bekanntmachung des Hinweises auf die Patenterteilung: **23.10.2002**
(21) Anmeldenummer: 98114449.6
(22) Anmeldetag: 01.08.1998
(51) Int. Cl.: C01B 13/34, C01B 7/03

(54) **Verfahren und Vorrichtung zur Herstellung von Metalloxiden aus Lösungen**
Process and apparatus for obtaining metal oxides from solutions
Procédé et dispositif pour l'obtention d'oxydes métalliques à partir de solutions

(30) Priorität: 06.08.1997 AT 132097
(43) Veröffentlichungstag der Anmeldung: 10.02.1999
(73) Patentinhaber: Andritz AG, 8045 Graz (AT)
(72) Erfinder: Lebl, Albert, Dipl.Ing.Dr., 1170 Wien (AT)
(74) Vertreter: Schweinzer, Friedrich

(56) Entgegenhaltungen:
- EP-A- 0 025 427
- EP-A- 0 295 389
- EP-A- 0 397 644
- WO-A-97/21629
- DE-A- 3 409 815
- KLADNIG W F: "INDUSTRIELLE OXIDROHSTOFFE HERSTELLUNG NACH DEM ANDRITZ-RUTHNER-SPRUEHROSTVERFAHREN" SPRECHSAAL, Bd. 124, Nr. 11 / 12, 1. November 1991, Seiten 748-754, XP000272593

## Beschreibung

Die Erfindung betrifft ein Verfahren zur Herstellung von Metalloxiden aus Metallsalze enthaltenden Lösungen durch Sprührösten der Lösungen. Die Erfindung betrifft auch eine Anlage zur Durchführung des Verfahrens.

Zur Rückgewinnung von Säuren werden wässerige Lösungen von Metallverbindungen mit Düsen in feinen Tropfen in einen beheizten Reaktor gesprüht. Durch Wärmeeinwirkung verdampft zuerst die Flüssigkeit (Verdampfungsphase) und anschließend beginnt die Metallverbindung sich zu zersetzen (Oxidationsphase). Die Tropfen fallen im freien Fall zum Reaktorkonus und müssen innerhalb weniger Sekunden fertig abgeröstet sein, d.h. pyrolytisch in ein Oxid und einen Säureanteil getrennt werden, bevor die Säuredämpfe am Reaktorkopf und das Oxid im Reaktorboden entfernt werden können. Wegen dieser kurzen Verweilzeit ist immer ein gewisser Restsäureanteil an das Metall, z.B. Eisen, gebunden, der nicht mehr ausreichend entfernt werden kann und als störende Verunreinigung (Säurereste) im Oxid verbleibt. Die Reaktortemperatur muß daher so hoch gewählt werden, daß auch größere Tropfen, oder Tropfen im Sprühkegel Zentrum noch weitgehend abgeröstet werden können. Dieser Umwandlungsvorgang erfolgt zeitlich verzögert vom äußeren Sprühkegelrand ausgehend nach innen fortschreitend. Dadurch kommt es zur Überhitzung und zur Qualitätsverschlechterung des Oxides (spezifische Oberfläche wird kleiner). Auch besteht die Gefahr immer mehr oder weniger Säuredämpfe mit dem Oxid auszutragen.

Ziel der Erfindung ist es eine bessere und vollständige Oxidation zur Erhöhung der Qualität der Metalloxide zu gewährleisten.

Dies erfolgt erfindungsgemäß dadurch, daß nach der Verdampfung der Säuren durch Sprührösten mit kurzer Verweilzeit in einem davon abgetrennten Bereich eine Oxidation (Nachrösten) der Lösungen mit einer wesentlich längeren Verweilzeit von zwischen 10 und 20 Minuten, erfolgt. Durch die Trennung der kurzen Verdampfungsphase von der wesentlich längeren Oxidationsphase kann die zur Erreichung der geforderten Qualität des Oxids erforderliche Verweilzeit unabhängig von Temperatur und Abmessungen des Reaktors eingestellt werden. Durch die lange Verweilzeit in der Oxidationsphase im Bereich von mehreren Minuten wird eine vollständige Oxidation der Metallsalz enthaltenden Lösungen der Säuren erreicht. Durch Variation der Verweilzeit läßt sich die gewünschte Oxidqualität besonders gut einstellen.

Eine günstige Ausgestaltung der Erfindung ist dadurch gekennzeichnet, daß das Sprührösten bei einer Temperatur von ca. 500 bis 600 °C erfolgt. Dadurch erfolgt die Verdampfung schonender und die Oxidqualität z.B. bei Fe-Cl₂ - Anlagen oder Mischsäurerückgewinnungsanlagen wird erhöht.

Eine vorteilhafte Ausgestaltung der Erfindung ist dadurch gekennzeichnet, daß das Nachrösten bei einer Temperatur von ca. 400 bis 500 °C erfolgt. Durch die niedrige Nachrösttemperatur können Oxide mit besonders hoher spezifischer Oberfläche oder auch Gamma-Eisen erzeugt werden.

Eine vorteilhafte Variante der Erfindung ist dadurch gekennzeichnet, daß das Nachrösten bei einer Temperatur von ca. 800 bis 1100 °C erfolgt. Mit dieser Variante lassen sich besondere Metallchloride auch noch sicher abrösten, d.h. Oxide bilden ohne Verunreinigungen durch Säurereste.

Eine günstige Weiterbildung der Erfindung ist dadurch gekennzeichnet, daß die Nachröstung mit reduzierender Atmosphäre wie z.B. H₂, Wasserdampf, Methan oder CO erfolgt. Dadurch können in günstiger Weise bestimmte Oxidmodifikationen erhalten werden.

Die Erfindung betrifft auch eine Anlage zur Herstellung von Metalloxiden aus Metallsalze enthaltenden Lösungen durch Sprührösten der Lösungen.

Sie ist dadurch gekennzeichnet, daß an den Sprühröster ein davon abgetrennter Bereich zum Nachrösten anschließt, wobei die Anlage eine Vorrichtung zur Abtrennung der Atmosphäre des Verdampfungsteils (Sprühröster) zum Oxidationsteil (Nachröstbereich) aufweist und mit einem Krählwerk ausgestattet ist. Durch die Abtrennung des Oxidbehandlungsteils vom Verdampfungsteil wird eine Oxidbehandlung zur Erreichung von bestimmten Oxidqualitäten ermöglicht, wobei die gewünschte Temperatur, Verweilzeit, und Atmosphäre zur Erzielung besonderer Oxideigenschaften eingestellt werden kann. Durch diese Ausführung kann die Oxidqualität besonders gut beeinflußt werden und es wird ermöglicht auch bisher nicht erzielbare Oxidmodifikationen zu erreichen. Durch das Krählwerk kann besonders gut die Verweilzeit geregelt werden, bei gleichzeitiger guter Durchmischung und somit gleichmäßiger Oxidqualität.

Eine günstige Ausgestaltung der Erfindung ist dadurch gekennzeichnet, daß der Bereich zum Nachrösten eine Heizeinrichtung aufweist, wobei die Heizeinrichtung z.B. ein Gasbrenner oder ein Strahlrohr mit indirekter Feuerung sein kann. Bei Einsatz eines Strahlrohres kann der Abgasstrom verringert und verhindert werden, daß Verbrennungsabgase mit dem Oxid reagieren.

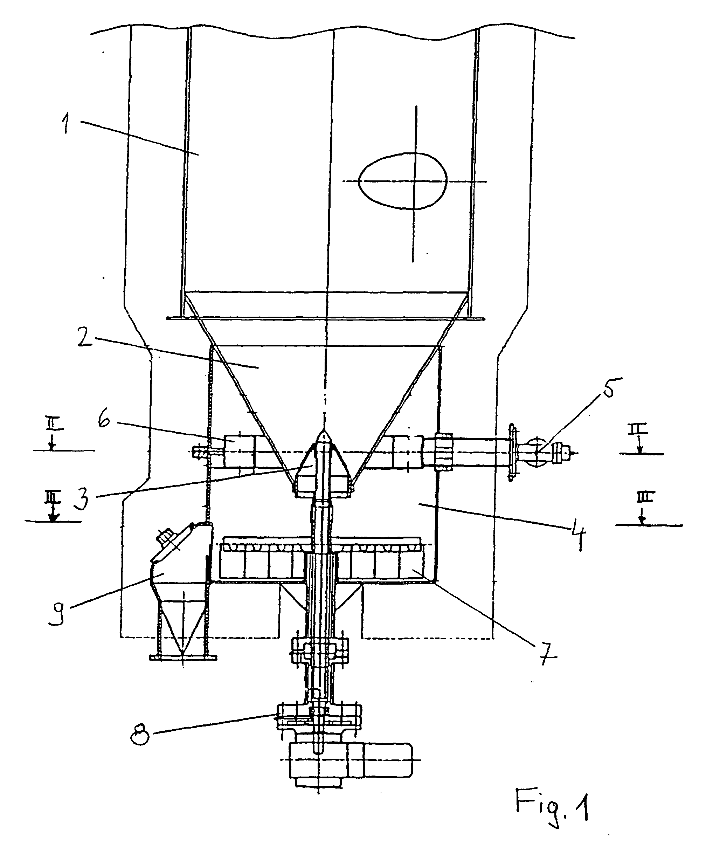

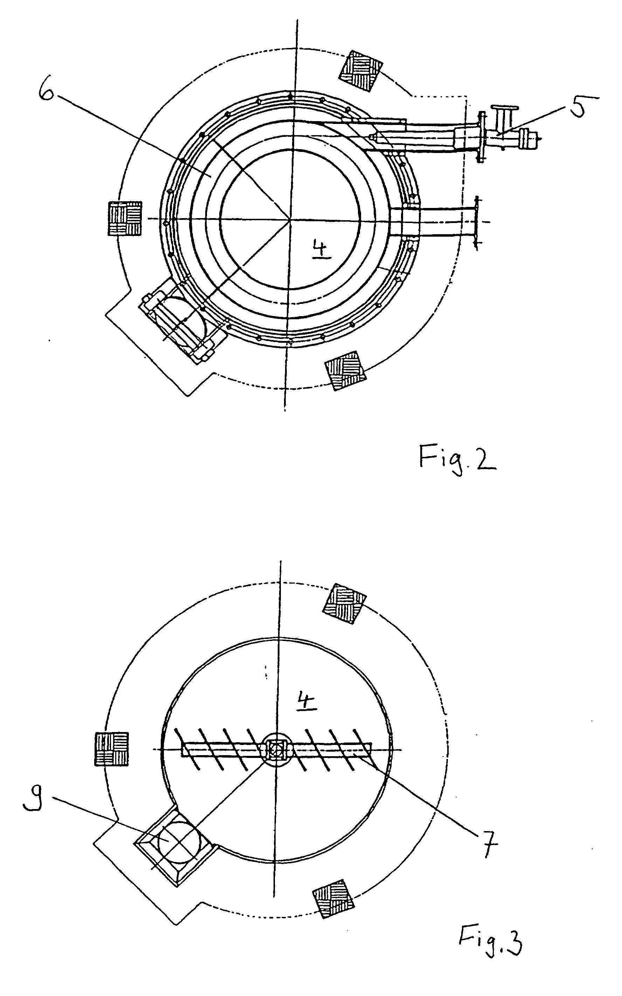

Die Erfindung wird nun im folgenden anhand der Zeichnungen beispielhaft beschrieben, wobei Fig. 1 einen Schnitt durch den unteren Bereich eines Sprühröstreaktors gemäß der Erfindung, Fig. 2 einen Schnitt gemäß Linie II-II in Fig. 1 und Fig. 3 einen Schnitt gemäß Linie III-III in Fig. 1 darstellt.

Fig. 1 zeigt einen Sprühröstreaktor 1 mit Austragskonus 2 und einer kombinierten Austrags- und Abdichtungseinrichtung 3, das als Kegelbrecher ausgebildet ist.

Das im Sprühröster 1 gebildete Oxid gelangt in den Austragkonus 2. Im Kegelbrecher 3 werden allfällige Agglomerationen der Oxidteilchen zerkleinert und in den Bereich 4 der Nachröstung ausgetragen. Gleichzeitig wird durch den Kegelbrecher 3 eine weitestgehende Trennung der Atmosphäre im Verdampfungsteil und der Atmosphäre im Oxidationsteil erreicht. Die Beheizung des Nachröstbereiches 4 erfolgt durch einen Gasbrenner 5, wobei dadurch ein Heizring 6 aufgewärmt wird. Am Boden des Nachröstbereiches 4 ist ein Krählwerk 7 mit Antrieb 8 angebracht, das das aus dem Reaktor ausgetragene Oxid von der Mitte des Nachröstbereiches 4 unter stetiger Durchmischung und somit stetiger Erneuerung der Reaktionsoberfläche, an den Rand zum Oxidaustrag 9 transportiert. Durch geeignete Wahl der Temperatur des Gasbrenners 5 bzw. auch Ausgestaltung der Wärmezufuhr (Heizrohr 3 stellt nur eine der Möglichkeiten dar) können die verschiedensten Oxidqualitäten erreicht werden. Es bieten sich durch die Trennung des Verdampferteiles vom Oxidationsteil nunmehr im abgetrennten Oxidationsnachröstteil eine große Anzahl von Oxidationsbehandlungsmöglichkeiten an, die es bisher nicht gab.

So kann eine direkte oder indirekte Beheizung der unteren Ebene ( mit oder ohne Strahlrohr ) erfolgen. Weiters ist ein Verändern der Verweilzeit des Oxides durch z.B. Drehzahländerung (Verweilzeit nicht wie bisher im Sekundenbereich sondern im Minutenbereich) möglich. Es besteht die Möglichkeit der Einstellung verschiedener Temperaturen im oberen und unteren Reaktorteil. z.B. 1100°C bei schwer abröstbaren Metallsalzen oder 400° zur Erzielung von besonderen physikalischen Eigenschaften wie hoher Aktivität (spezifische Oberfläche in m2/g). Weiters kann durch Erzeugung von unterschiedlicher Atmosphäre z.B. oxidierend (O₂ - Überschuß) im oberen Teil und reduzierend (CO) im unteren Teil und Aufgabe im unteren Teil von z.B. Wasserdampf, H₂, CH₄ eine Beeinflussung der Oxidmodifikation und Qualität erreicht werden.

Fig. 2 stellt einen Schnitt durch den Nachröstbereich 4 in Höhe der Brennerebene gemäß Linie II-II in Fig. 1 dar.

Fig. 3 zeigt den Schnitt durch den Nachröstbereich 4 in Höhe des Krählwerks 7 gemäß Linie III-III in Fig. 1.

Die Erfindung ist nicht auf die dargestellten Ausführungen beschränkt, sie kann z.B. andere Arten der Beheizung oder andere Austragsaggregate sowohl aus dem Austragkonus 2, als auch aus dem Nachröstbereich 4 aufweisen.

## Patentansprüche

1. Verfahren zur Herstellung von Metalloxiden aus Metallsalze enthaltenden Lösungen durch Sprührösten der Lösungen, **dadurch gekennzeichnet, daß** nach der Verdampfung der Säuren durch Sprührösten mit kurzer Verweilzeit in einem davon abgetrennten Bereich eine Oxidation (Nachrösten) der Lösungen mit einer wesentlich längeren Verweilzeit von zwischen 10 und 20 Minuten, erfolgt.

2. Verfahren nach Anspruch 1, **dadurch gekennzeichnet, daß** das Sprührösten bei einer Temperatur von ca. 500 bis 600 °C erfolgt.

3. Verfahren nach Anspruch 2, **dadurch gekennzeichnet, daß** das Nachrösten bei einer Temperatur von ca. 400 bis 500 °C erfolgt.

4. Verfahren nach Anspruch 2, **dadurch gekennzeichnet, daß** das Nachrösten bei einer Temperatur von ca. 800 bis 1100 °C erfolgt.

5. Verfahren nach einem der Ansprüche 1 bis 4, **dadurch gekennzeichnet, daß** die Nachröstung mit reduzierender Atmosphäre wie z.B. H₂, Wasserdampf, Methan oder CO erfolgt.

6. Anlage zur Herstellung von Metalloxiden aus Metallsalze enthaltenden Lösungen durch Sprührösten der Lösungen, **dadurch gekennzeichnet, daß** an den Sprühröster (1) ein davon abgetrennter Bereich (4) zum Nachrösten anschließt, wobei die Anlage eine Vorrichtung (3) zur Abtrennung der Atmosphäre des Verdampfungsteils (z.B. Sprühröster 1) vom Oxidationsteil (z.B. Nachröstbereich 4) aufweist und mit einem Krählwerk (7) ausgestattet ist.

7. Anlage nach Anspruch 6, **dadurch gekennzeichnet, daß** der Bereich zum Nachrösten (4) eine Heizeinrichtung (5)aufweist.

8. Anlage nach Anspruch 7, **dadurch gekennzeichnet, daß** die Heizeinrichtung ein Gasbrenner (6) ist.

9. Anlage nach Anspruch 7, **dadurch gekennzeichnet, daß** die Heizeinrichtung ein Strahlrohr mit indirekter Feuerung ist.

## Claims

1. Process for producing metal oxides from solutions containing metal salts by spray-roasting these solutions, **characterised in that** evaporation of the acids by spray roasting at short retention time is followed by oxidation (post-roasting) in a separate area at an essentially longer retention time of between 10 and 20 minutes.

2. Process according to claim 1, **characterised in that** spray roasting takes place at a temperature of approx. 500 to 600 °C.

3. Process according to claim 2, **characterised in that** post-roasting takes place at a temperature of approx. 400 to 500 °C.

4. Process according to claim 2, **characterised in that** post-roasting takes place at a temperature of approx. 800 to 1100 °C.

5. Process according to one of the claims 1 to 4, **characterised in that** post-roasting takes place in a reducing atmosphere such as H₂, water vapour, methane or CO.

6. Plant for producing metal oxides from solutions containing metal salts by spray-roasting these solutions, **characterised in that** the spray roaster (1) is followed by a separate area (4) for post-roasting, with the plant containing a device (3) for separating the atmosphere in the evaporation section (e.g. spray roaster 1) from the oxidation section (e.g. post-roasting section 4) and is provided with a rabble rake (7).

7. Plant according to claim 6, **characterised in that** the section for post-roasting (4) has a heating device (5).

8. Plant according to claim 7, **characterised in that** the heating device is a gas burner (6).

9. Plant according to claim 7, **characterised in that** the heating device is a radiant tube with indirect heating.

## Revendications

1. Procédé de production d'oxydes métalliques à partir de solutions contenant des sels métalliques, par le grillage par pulvérisation de ces solutions, **caractérisé en ce que** suite à l'évaporation des acides par le grillage par pulvérisation des acides à courte durée de séjour, a lieu une oxydation (grillage postérieur) des solutions dans une aire séparée à un temps de séjour essentiellement plus long et compris entre 10 et 20 minutes.

2. Procédé selon la revendication 1, **caractérisé en ce que** le grillage par pulvérisation a lieu à une température comprise entre env. 500 et 600°C.

3. Procédé selon la revendication 2, **caractérisé en ce que** le grillage postérieur a lieu à une température comprise entre env. 400 et 500 °C.

4. Procédé selon la revendication 2, **caractérisé en ce que** le grillage postérieur a lieu à une température comprise entre env. 800 et 1100 °C.

5. Procédé selon l'une des revendications 1 à 4, **caractérisé en ce que** le grillage postérieur a lieu dans une atmosphère réductive comme dans le H₂, la vapeur d'eau, le méthane ou le CO.

6. Installation de production d'oxydes métalliques à partir de solutions contenant des sels métalliques, par le grillage par pulvérisation de ces solutions, **caractérisé en ce que** le pulvérisateur/grilleur (1) est suivi d'une aire séparée (4) pour le grillage postérieur, cette installation contenant un dispositif (3) de séparation de l'atmosphère de la section d'évaporation (par exemple, le pulvérisateur de grillage 1) de celle d'oxydation (par exemple, la section de grillage postérieur 4) et est pourvu d'un mécanisme de raclage (7).

7. Installation selon la revendication 6, **caractérisé en ce que** la section de grillage postérieur (4) est pourvu d'un dispositif de chauffage (5).

8. Installation selon la revendication 7, **caractérisé en ce que** le dispositif de chauffage est un brûleur à gaz (6).

9. Installation selon la revendication 7, **caractérisé en ce que** le dispositif de chauffage est un tube radiant à chauffage indirect.
